# EUROPEAN PATENT APPLICATION

(11) **EP 1 170 662 A2**
(43) Date of publication of application: **09.01.2002**
(21) Application number: 01116062.9
(22) Date of filing: 02.07.2001
(51) Int. Cl.: G06F 9/50, H04L 29/06

(54) **Apparatus and method for dynamically allocating computer resources based on service contract with user**

(30) Priority: 07.07.2000 JP 2000211980
(71) Applicant: Hitachi, Ltd., Chiyoda-ku, Tokyo 101-8010 (JP)
(72) Inventor: Tamaki, Yoshiko, Hitachi, Ltd., Intell Prop. Group, Chiyoda-ku, Tokyo 100-8220 (JP); Shonai, Toru, Hitachi, Ltd., Intell. Prop. Group, Chiyoda-ku, Tokyo 100-8220 (JP); Sagawa, Nobutoshi, Hitachi, Ltd., Int. Prop. Gr., Chiyoda-ku, Tokyo 100-8220 (JP); Kawabe, Shun, Hitachi, Ltd., Int. Prop. Gr., Chiyoda-ku, Tokyo 100-8220 (JP)
(74) Representative: Strehl Schübel-Hopf & Partner

(57) **Abstract**

A data center allocates computer resources independently to each user company, and automatically changes a computer allocation in real time in accordance with each load. A control program (P20) forms a computer allocation control table (T22, T23) for each service level contract made between the data center and each user company, and sets the table to a load allocating apparatus (d100). A table (T19) is formed which is used for searching a user company identifier from an IP address (A0) in a user request packet. The load allocating apparatus (d100) checks a service level contract from the user request packet and transfers the user request packet to a proper computer group. The control program (P20) compares the service level contract (T20) with the monitoring result of the operation state of computers, and if the contract condition is not satisfied, the number of allocated computers is changed.

## Description

### BACKGROUND OF THE INVENTION

The present invention relates to an apparatus and method for allocating resources of a computer system to users. More particularly, the invention relates to an apparatus and method for allocating computer resources of a system constituted of a plurality of computers interconnected by a network, the apparatus and method being capable of allocating computer resources in real time, the computer resources being necessary for maintaining a service level contracted beforehand with each user while a plurality of user's requests are processed, and capable of guaranteeing securities between users.

Business types are increasing which outsource intra-company information system running and company home page management to an ASP (application service provider) in order to reduce the cost of an information department. Many ASP's outsource supply, running and management of computer resources to a data center.

The data center prepares a plurality of computer resources and allocates them to a plurality of user companies in order to reduce the running cost of the data center itself and supply low price services to the user companies. In order to guarantee securities between user companies, generally the data center often allocates different computer resources and storage resources to each user company.

A user company load fluctuates between time zones, seasons and the like. From this reason, the data center often contracts with a user company so as to increase or decrease allocated resources in accordance with the user company load. The company load, particularly the load of the company whose home page management is outsourced, is difficult to predict because many and unidentified consumers access the home page via the Internet. In order to deal with this, a user company contracts with a data center under the contract term that a predetermined number of computer resources are increased during a predetermined period by predicting on the user company side an increase in the load to be caused by a new product announcement. The data center allocates the increased computer resources to other user companies during the other period to efficiently utilize the resources. In order to facilitate such a configuration change, the data center is configured in such a manner that a load allocating apparatus is installed at the front stage of a plurality of computer resources to allocate the computer resources to a user company A during some period and some computer resources to a user company B during the other period. An example of the load allocating apparatus is an ACE director of Alteon Websystems. A load allocating apparatus is disclosed, for example, in Nikkei Open Systems, 1999, 12, No. 81, pp. 128 - 131. Settings of a load allocating apparatus, for example, the number of allocated servers, is manually made by the data center in accordance with a contract with a user company, such as the contract described above. If it is necessary to increase storage resources, it is necessary to perform mirroring of the contents of storages.

Since a data center provides different computer resources to each of a number of user companies, the management cost for the number of computer resources increases. In order to avoid this, it is conceivable that a small number of computer resources each having a high performance, e.g., highly multiplexed computers SMP, are introduced and a plurality of user companies share them. In order to guarantee securities between user companies, a virtual computer function is utilized. An example of the virtual computer is a Processor Resource Management Feature PRMF of Hitach Ltd. PRMF is disclosed, for example, in the HITAC manual 8080-2-148-60. According to PRMF, a plurality of operating systems (OSes) run on one computer, and independent resources such as main storages and network adapters are allocated to each OS. Since resources are not shared among OSes, securities are guaranteed between programs of different user companies executed on different OSes. Although PRMF is configured so that ratios of CPU resources allocated to OSes can be controlled, a ratio change is limited only to those ratios planned beforehand.

It is becoming usual to make a service level contract between and ASP's and ISP's (Internet service provider) and user companies. A user makes a contract with ASP to guarantee a service level such as connectivity, availability and latency performance. In addition to this contract, a compensation contract for the case that the guarantee level is not realized is often made.

U.S. Patent No. 5,774,668 discloses that a data center having a plurality of application servers monitors the load of each service application and increases or decreases the number of application servers in accordance with a change in the load. However, in U.S. Patent No. 5,774,668, a process load of each user (client) is not monitored. Further, U.S. Patent No. 5,774,668 does not teach that the data center increases or decreases the number of application servers in order to maintain the service level contracted with each user (client).

With the manual setting of a load allocating apparatus by a data center based on the contract with a user company, it is difficult to deal with in real time an abrupt load change not predicted by the user company. This is also applied to the case that different computers are allocated to each user company or that a virtual computer is used. It is difficult to increase storage resources rapidly because of an overhead of data copy for mirroring. In the case of a data center, the latency performance and the like are difficult to be defined and measured if the process contents are not stereotyped, e.g., if a process request from one user company is processed by a plurality of computers.

### SUMMARY OF THE INVENTION

In order to solve the above-described problems, an object of the invention is to provide a resource allocating apparatus and method for allocating, dynamically or in real time, computer resources and storage resources of a data center to each user company in response to a load change of each user company.

To this end, according to the invention, a user identification table is prepared for each service level contract made between each user company and the data center, this table storing information on a correspondence between a unique user ID and a user company. A related user company is identified from a user request packet sent to the data center. The packet is added with the user ID corresponding to the service level contracted with the user company. A management server forms a definition table for defining a group of computers which processes the user request belonging to each user ID, and dynamically sets the definition table to the load allocating apparatus. The load allocating apparatus selects a computer group from groups set to the definition table to make it execute the user request. If there is a plurality of load allocating apparatus, the management server controls to maintain integrity of the definition table between load allocating apparatus.

Furthermore, the management server monitors the operation state of each computer to check whether the service level contract with each user company is satisfied or not, and if necessary increases or decreases computer resources. Specifically, the management server changes a computer group in the definition table and sets it again to the load allocating apparatus.

Still further, the management server forms a history of information on whether the computer resource amount and service level contract corresponding to each user ID are satisfied, to thereafter form charge information. In order to measure the process throughput of the whole data center, the number of user requests and responses transmitted to and from the data center may be measured for each user ID.

According to another embodiment of the invention, the data center is structured by using computers having a virtual computer mechanism. Each user company is provided with a virtual computer mechanism under the control of one OS, and the management server dynamically sets a use allocation rate of CPU of each computer mechanism, to each computer. The management service monitors the operation state of each computer to check whether the service level contract is satisfied, and if necessary increases or decreases the use allocation rate of CPU.

According to the invention, each user company is provided with a user ID for identifying the contracted service level, and in accordance with the user ID, computer resources are supplied. In accordance with the monitoring result of the operation state of each computer, the computer resource amount can be automatically increased or decreased through comparison between the monitoring result and the service level contract corresponding to each user ID. In this manner, a computer resource allocation can be changed in real time even for a rapid load change not predicted on the user company side.

In the embodiments of the invention, although a juridical corporation is used by way of example as a user making a service level contract with the data center, the invention is also applicable to a private user depending upon conditions. Therefore, in the specification, a user company is often described simply as a user.

Even if a computer resource allocation is changed, storage resources are shared by all computers and the storage side checks an access privilege from the user ID. Therefore, securities between users can be guaranteed without an overhead of mirroring.

Further, the numbers of requests and responses per unit time passing through the data center are measured and collected for each user ID. It is therefore easy to measure the performance of the data center as viewed from users.

### BRIEF DESCRIPTION OF THE DRAWINGS

Fig. 1 is a diagram showing an example of the structure of a system constituted of a data center and users interconnected by the Internet.

Fig. 2 is a diagram showing an example of the structure of a data center.

Fig. 3 is a diagram showing the structure of a gateway shown in Fig. 2.

Fig. 4 a diagram showing the structure of a management server shown in Fig. 2.

Figs. 5(A) to 5(C) are diagrams showing examples of tables possessed by a load allocating apparatus shown in Fig. 2.

Fig. 6 is a diagram showing an example of a table possessed by a storage shown in Fig. 2.

Figs. 7(A) to 7(O) are diagrams showing the structures of packets passing through signal lines shown in Fig. 2.

Fig. 8 is a flow chart illustrating an example of an ordinary operation of a control program shown in Fig. 4.

Figs. 9(A) and 9(B) are block diagrams showing another example of an ordinary operation flow of the control program shown in Fig. 4.

Fig. 10 is a diagram showing another example of the structure of the data center.

Fig. 11 is a diagram showing data stored in LPAR control registers shown in Fig. 10.

Figs. 12(A) to 12(O) are diagrams showing the structures of packets passing through signal lines shown in Fig. 10.

Fig. 13 is a diagram showing the structure of a management server shown in Fig. 10.

Fig. 14 is a flow chart illustrating an example of the ordinary operation of a control program shown in Fig. 13.

Fig. 15 is a diagram showing another example of the structure of the data center.

Figs. 16(A), 16(C), 16(D), 16(M) and 16(O) are diagrams showing the structures of packets passing through signal lines shown in Fig. 15.

Fig. 17 is a diagram showing the structure of a gateway shown in Fig. 15.

Fig. 18 is a diagram showing the structure of a management server shown in Fig. 15.

Fig. 19 is a flow chart illustrating an example of the operation of a control program shown in Fig. 18.

Fig. 20 is a flow chart illustrating an example of an initial operation of the control program shown in Fig. 4.

Fig. 21 is a flow chart illustrating an example of an initial operation of a control program shown in Fig. 13.

Fig. 22 is a diagram showing a condition input dialog for a user using the data center shown in Fig. 2.

Fig. 23 is a diagram showing a service level condition input dialog for a user using the data center shown in Fig. 2.

Fig. 24 is a diagram showing a service level condition input dialog for a user using the data center shown in Fig. 9.

Fig. 25 is a diagram showing a condition input dialog for a user using the data center shown in Fig. 15.

### DESCRIPTION OF THE EMBODIMENTS

Embodiments of the invention will be described with reference to the accompanying drawings.

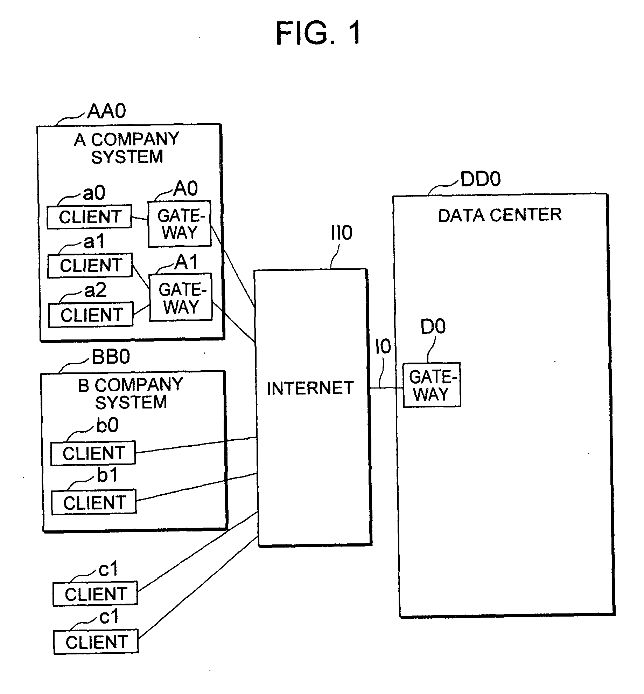

A first embodiment is shown in Fig. 1. In the example shown in Fig. 1, a data center as the main subject of this invention is connected via the Internet II0 to a user company A (AA0), a user company B (BB0) and consumers c0 and c1 accessing the home pages of the A and B companies. Clients a0, a1 and a2 have private network addresses (PNA) of an A company system and access a gateway D0 in the data center via gateways A0 and A1 and a virtual private network (VPN). Requests from the clients c0 and c1 will be later described in a third embodiment.

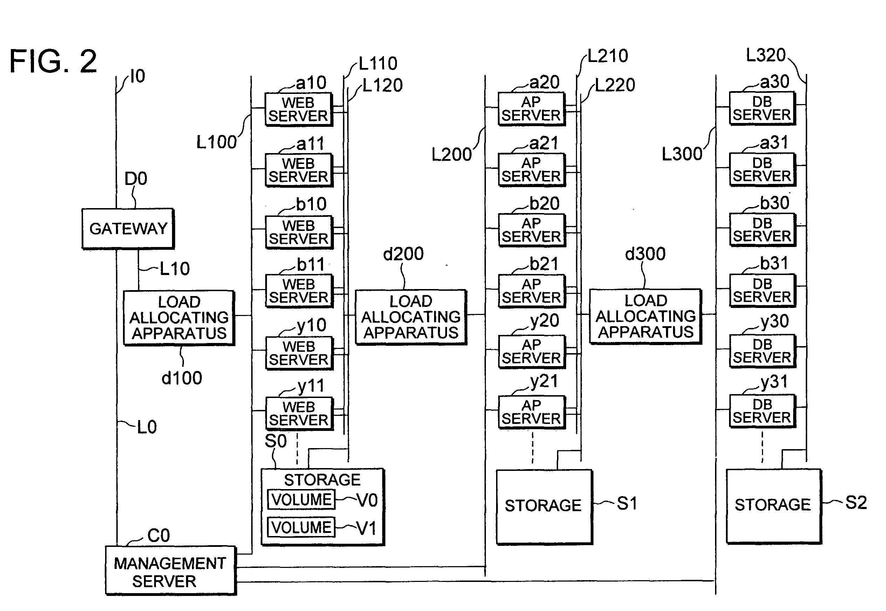

Fig. 2 shows the structure of a data center DD0. In this example, the data center has a three-layer structure including a Web server group, an AP server group and a DB server group. The Web server provides a Web browser interface in response to a user request. The AP server runs an application program which is generated from a Web server. The DB server deals with a database access request issued from an application program.

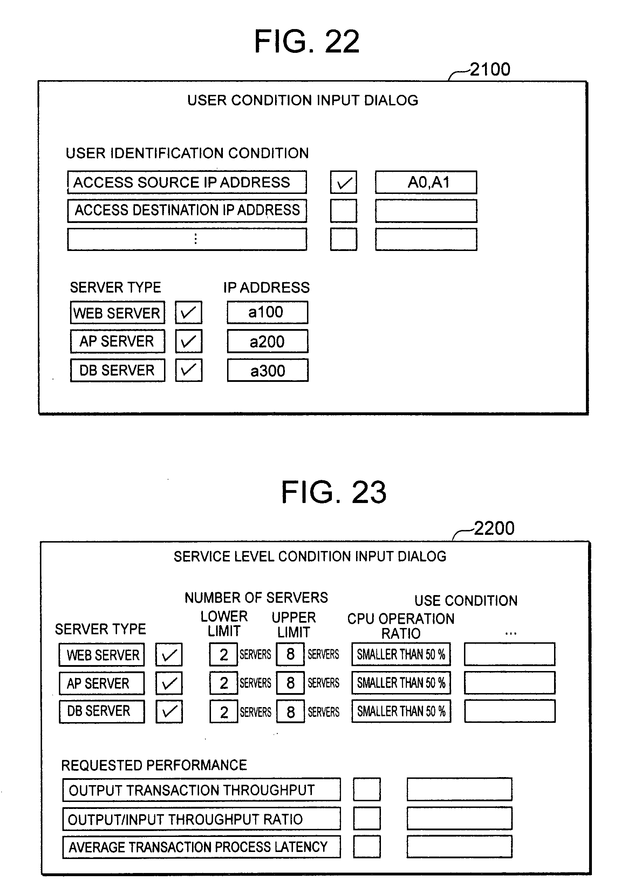

Fig. 22 shows an example of an input dialog to be used when the user company A makes a use condition contract with the data center. In this example, the contents of this contract are as follows. A0 or A1 is used as the access request source IP address of a request packet in order to identify that an access request input to the gateway D0 is an access request from a user belonging to the user company A. In addition, the user company A can use all of the Web server group, AP server group and DB server group of the data center, and a program set up in response to a user request of the user company A uses a100 as the IP address of a Web server, a200 as the IP address of an AP server and a300 as the IP address of a DB server.

Fig. 23 shows an example of an input dialog to be used when the user company A makes a service level contract with the data center. In this example, at least two Web servers, two AP servers and two DB servers are allocated to the user company A, and all the servers are made to run at a CPU operation rate smaller than 50 %. If the operation rate becomes 50% or higher, eight servers at a maximum are allocated, i.e., eight Web servers, eight AP servers and eight DB servers. In this example, although check symbols are not entered in the input dialog, an output transaction throughput, for example, at an output of the data center, a throughput ratio of an output transaction to an input transaction, and a transaction process latency may be entered in the service level contract.

It is assumed that in accordance with the contract made by the input dialog, Web servers a10 and a11, AP servers a20 and a21 and DB servers a30 and a31 are allocated to the A company, and Web servers b10 and b11, AP servers b20 and b21 and DB servers b30 and b31 are allocated to the B company, respectively as initial values. A storage S0 is allocated to the A and B companies in the unit of a volume. A volume V0 is allocated to the A company and a volume V1 is allocated to the B company. Storages S1 and S2 are allocated in the similar manner, although this allocation is not shown in Fig. 2. Servers y10 to y31 are reserved servers which are allocated when the loads of the A and B companies become large.

It is assumed that the IP addresses used by the A company are a100 for the Web servers, a200 for the AP servers, and a300 for the DB servers. Similarly, it is assumed that by using the input dialog, the IP addresses used by the B company are set to b100 for the Web servers, b200 for the AP servers, and b300 for the DB servers.

With reference to the relevant drawings, the description is given as to how the gateways A0 and D0, management server C0 and load allocating apparatus d100, d200 and d300 deal with a request from the user A by using the servers a10 to a31.

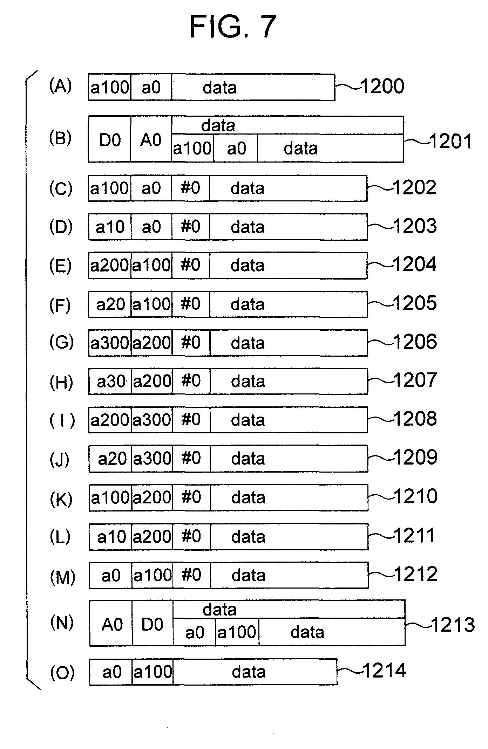

The structure of a request packet which the client a0 sends to the gateway A0 shown in Fig. 1 is shown in Fig. 7(A) at 1200. A start field (a100) of the packet corresponds to the address of a destination server, and the next field (a0) corresponds to the address of a source client. When the packet 1200 is sent to the Internet II0, the gateway A0 capsulizes the packet for a virtual private network (VPN) to form a packet 1201 shown in Fig. 7(A). The gateway D0 uncapsulizes this packet to obtain the packet 1200. Since this technology is well known, the detailed description thereof is omitted.

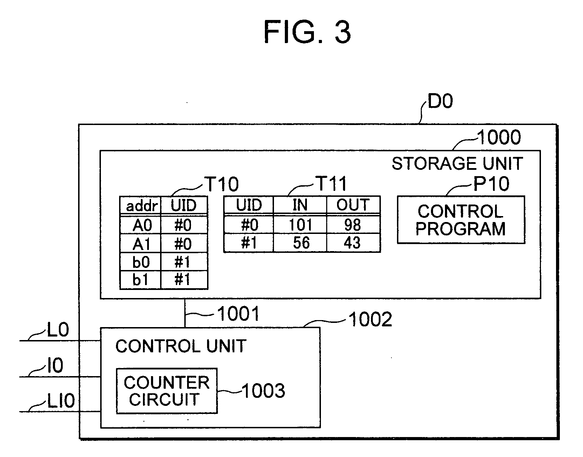

Fig. 3 is a diagram showing the structure of the gateway D0 at the input of the data center DD0. The gateway D0 uncapsulizes the packet shown in Fig. 7(B) input from a signal line I0, obtains a user ID #0 by referring to a user ID table T10, and adds #0 to the packet to generate a packet 1202 shown in Fig. 7(C) and send it to a signal line L10. The user ID table T10 is formed by the management server C0 in accordance with the user condition input dialog shown in Fig. 22 and set beforehand to the gateway D0 via a signal line L0. Namely, the request which accessed the data center DD0 by using the source address A0 or A1 is regarded as the request from the user having the user ID #0, i.e., the request from the A user.

At the same time when the packet 1202 is generated, a counter circuit 1003 of the gateway D0 counts a pass of the input request having the user ID #0 and a count result is set to an input/output result storage table T11.

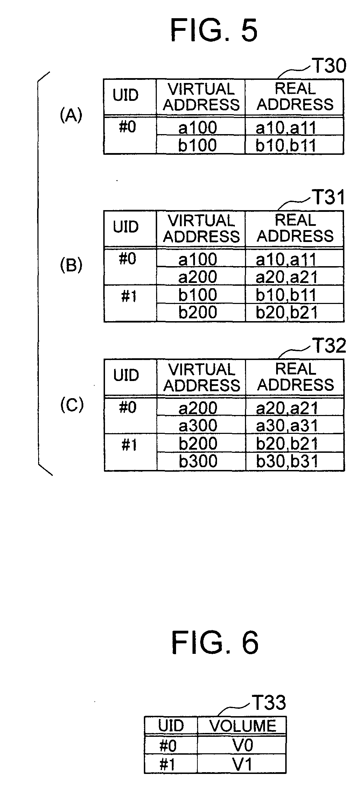

The load allocating apparatus d100 which received the packet 1202 via the signal line L10 has a server address correspondence table T30 shown in Fig. 5(A). This table T30 stores, for each user ID, information on to which real server a request to servers, which was input in the dialog shown in Fig. 22 as a user application, is sent. Since the packet 1202 has the user ID #0 and the destination address a100, the load allocating apparatus d100 changes the destination server address a100 to either a10 or a11 by referring to the table T30, and generates a packet 1203 shown in Fig. 7(D). This technology of selecting and changing the destination address is well known, and so the detailed description thereof is omitted.

The Web server a10 receives the packet 1203, and if a process at an AP server is necessary, generates a packet 1204 (Fig. 7(E)) for requesting an access to a200. This packet 1204 is sent via a bus L110 to a load allocating apparatus d200. The load allocating apparatus d200 has a server address correspondence table T31 shown in Fig. 5(B). By referring to this table, the load allocating apparatus d200 changes the destination server address a200, for example, to a20 to generate a packet 1205 (Fig. 7(F)).

Similarly, the AP server a20 generates, if necessary, a packet 1206 (Fig. 7(G)), and a load allocating apparatus d300 having a server address correspondence table T32 (Fig. 5(C)) changes the packet 1206 to a packet 1207 (Fig. 7(H)) to make the DB server a30 process this packet.

A response from the DB server a30 to the AP server a20, Web server a10, and to client a0 is returned in a manner similar to that described above. In this case, packets 1208 (Fig. 7(I)) to 1214 (Fig. 7(0)) are sequentially generated. When the gateway D0 sends the response packet 1213 (Fig. 7(N)) to the gateway A0, the counter circuit 1003 of the gateway D0 counts a pass of the output request having the user ID #0 and a count result is set to the input/output result storage table T11.

Although not described above, when a request is issued from the user company B, the gateway D0 adds a user ID #1 to the packet in the similar manner to that described above, and the packet is sequentially processed by the servers b10 to b31 in the similar manner to that described above.

With the above operations, the servers for executing the processes of the users A and B are divided into or allocated as the servers a10 to a31 and the servers b10 to b31.

Access to the storage will be described by taking as an example the storage S0 shown in Fig. 2. The storage S0 is shared by all Web servers by a signal line L120. When each server accesses the storage, the user ID is added to the access request. The storage S0 has a volume access privilege table T33 shown in Fig. 6. This table T33 stores, for each user ID, information on which volume is permitted to access. If the access request of the user ID #1 is an access to the volume V0, the storage S0 refers to this table T33 and rejects this access. Therefore, even if the storage S1 is shared by all Web servers, securities between the users A and B can be guaranteed.

Referring to Fig. 2, the management server C0 monitors the operation states of the servers and load allocating apparatus via signal lines L100, L200 and L300. The monitoring contents are determined from the contents of the service level contract with each user and the function of a monitoring program. For example, the monitoring contents include a CPU operation rate, a load allocating destination history and the like. The monitoring program may run on the management server C0, each server or each load allocating apparatus. The management server C0 acquires the contents of the input/output result table T11 of each user from the gateway D0 via the signal line L0.

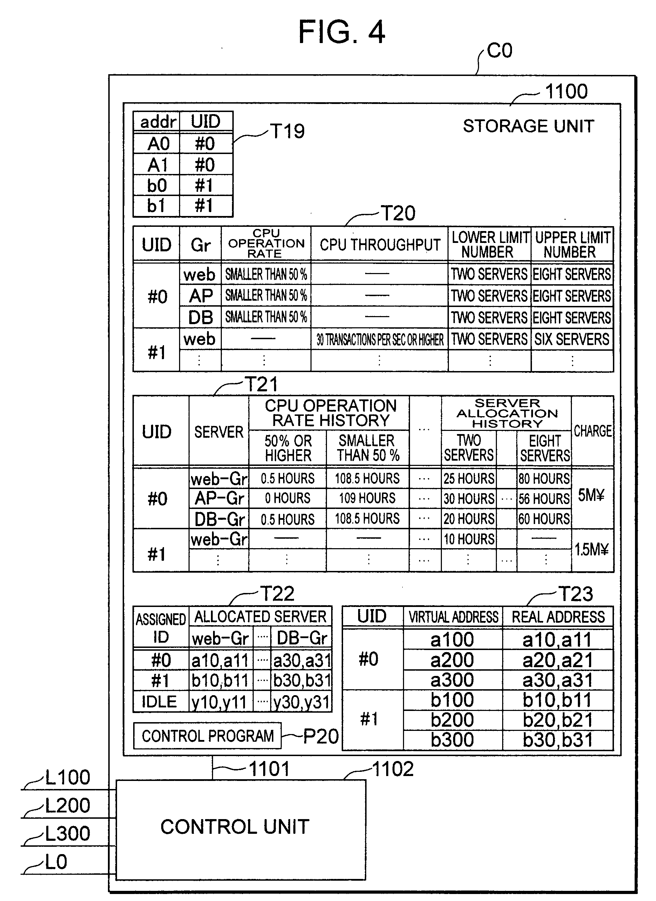

Fig. 4 is a diagram showing the structure of the management server C0. T19 represents a user ID table which is set by a control program P20 by using the user condition input dialog shown in Fig. 22. T20 represents a service level contract content table for each user, which table is set by the control program P20 by using the service level condition input dialog shown in Fig. 23. In this contract, the user having the user ID #0 is allocated with at least two Web servers, two AP servers and two DB servers, all these servers run a program at a CPU operation rate smaller than 50 %, and if the CPU operation rate exceeds this level, the number of servers is increased to eight servers at each server group at the maximum. In the contract with the user having the user ID #1, the user is allocated with at least two Web servers, two AP servers and two DB servers, the access response throughput of the data center is maintained 30 responses per second, and if the throughput lowers this level, the number of servers is increased to six servers at each server group at the maximum.

With reference to the monitoring results and the service level contract content table T20, the control program P20 checks whether the current resource allocation satisfies the service level contract, and stores the check results in a service history storage table T21. For example, CPU operation rate history of all servers allocated to the user ID #0 is recorded in the service history storage table T21. If the monitoring result does not satisfy the service contract, the control program P20 increases the number of servers to be allocated. To this end, the management server is provided with a server allocation management table T22 and a server address correspondence table T23. The server management table T22 stores information on which server is allocated to which user. The server address correspondence table T23 is a correspondence table storing information on a correspondence between the server name recognized by a user application and an allocated real server. This table T23 is a master table of server address correspondence tables T30 to T32 possessed by the load allocating apparatus d100 to d300. The server history storage table also stores charge information. Although not shown, if the contract with the user states that the charge is increased in accordance with the number of allocated servers, the charge calculation equation changes so that the changed equation is reflected. If the contract with the user states that the charge is changed in accordance with the degree of not maintaining the contracted service level, then this change is reflected.

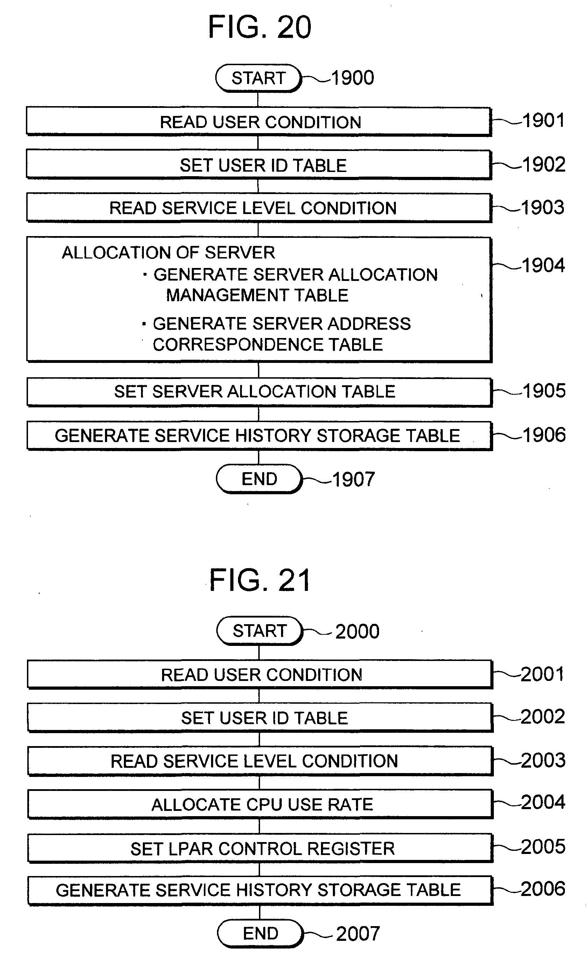

The procedure of the control program P20 of the management server C0 to initially allocate resources in order to execute the above-described control will be described with reference to Fig. 20.

The management server C0 which executes the control program P20 first acquires the information entered in the user condition input dialog shown in Fig. 22 to generate the user ID table T19 (Step 1901). Next, this information is set to the gateway D0 via the signal line L0 (Step 1902).

The management server C0 acquires the information entered in the service level condition input dialog shown in Fig. 23 to generate the service level contract content table T20 and the virtual address field in the service address correspondence table T23 (Step 1903). Next, servers are allocated from each of the Web server, AP server and DB server groups. Specifically, after confirming that each user is allocated with at least two servers of each group, by referring to the service level contract content table T20, the management server C0 generates the server allocation management table T22 and the real address field of the server address correspondence table T23 (Step 1904). Next, a necessary portion of the generated server address correspondence table T23 is copied to the load allocation apparatus d100, d200 and d300 via the signal lines L100, L200 and L300 (Step 1905).

With reference to the service level contract content table T23, the service history storage table T21 is generated (Step 1906). Specifically, a field for recording the CPU operation rate history is generated for the user ID #0 and a field for recording a transaction output throughput history (not shown) is generated for the user ID #1.

With the above operations, information necessary for the resource allocation control is prepared and set to the gateway D0 and the load allocating apparatus d100, d200 and d300, so that the system can start its operation under the conditions of proper resource allocation.

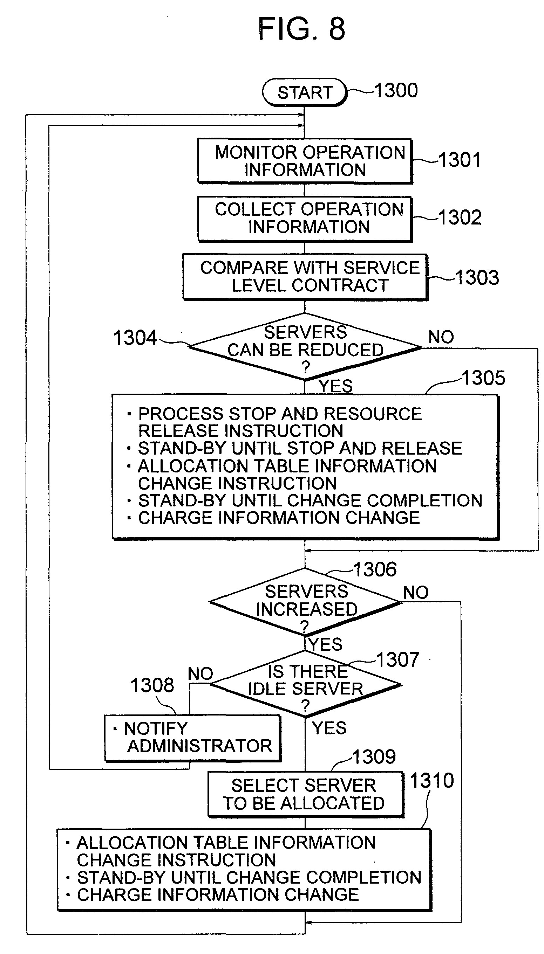

Next, the procedure of the control program P20 to change a resource allocation when the load increases will be described with reference to Fig. 8.

As described earlier, the operation information of the system is monitored via the signal lines L100, L200, L300 and L0 (Step 1301). The operation information of each user ID is collected and stored in the service history storage table T21 (Step 1302). After the service history storage table T21 is compared with the service level contract content table T20 (Step 1303), it is checked whether the number of servers can be reduced from the viewpoint of the service level contract (Step 1304). As a method of judging whether the number of servers can be reduced, a proportional calculation between products of CPU operation rates and the numbers of servers may be used. For example, although the service level condition of the user #0 has a CPU operation rate smaller than 50 %, if four Web servers are currently allocated and the CPU operation rate is all smaller than 25 %, then it can be judged from a simple proportional calculation that the number of Web servers can be reduced to two Web servers. In practice, the number of servers is multiplied by various safety coefficients given from experiences. If the number of servers can be reduced, a process termination instruction is notified to the server to be removed, via a corresponding one of the signal lines L100, L200 and L300. The notified server terminates the program process and releases the resource having been used. Namely, the contents of a memory address translation table and a cache are invalidated. After completion of the release, the server notifies the release completion to the management server. In response to this, the management server instructs the load allocating apparatus d100 to d300 to change the server address correspondence tables T30 to T32. Next, it is checked whether the contents of all the load allocating apparatus are coincident. The charge calculation equation is changed. In this example, the number of allocated servers and the history of the allocated times are stored. For the charge calculation, a unit charge of one server per unit time is predetermined to calculate a charge. Namely, the total number of servers, the history of allocated times and the unit charge are multiplied together to calculate the charge (Step 1305).

In this example, since the allocation history is recorded distinguishably between the Web server group, AP server group and DB server group, the unit charge may be changed for each group to calculate the charge from a product of the number of allocated servers for each group, the history of the allocated times and each unit charge. In this example, although not shown, if the effective performance is different among servers, it is apparent to calculate the charge from a product of the number of servers, the effective performance, the history of the allocated times, and the unit charge. Also, in this example, the number of request packets passing through the gateway D0 and the number of response packets are recorded. If the gateway passing throughput of request packets is relatively stable, the gateway passing throughput of response packets may be used as a criterion for estimating the data center process performance. In this case, the gateway passing throughput of response packets may be received from the gateway via the signal line L0 to calculate the charge through comparison with a predetermined contracted standard throughput. For example, the time during which the standard throughput is satisfied may be charged by a specified charge calculation, whereas for the time not satisfied the standard throughput, a penalty may be subtracted from the charge. By setting a unit charge for the standard throughput, the charge may be calculated from (measured throughput/standard throughput x unit charge). If the input throughput of request packets fluctuates greatly, the charge may be calculated from (response packet throughput/request packet throughput).

Returning back to Fig. 8, it is checked whether it is necessary to increase the number of servers (Step 1306). Checking how many servers are increased may be performed, for example, by a proportional calculation similar to reducing the number of servers. If it is necessary to increase the number of servers, by referring to the server allocation management table T22 12 for each of the Web server, AP server and DB server groups, it is checked whether there is an idle server (Step 1307). If there is no idle server, this effect is notified to the system administrator (Step 1308). If there is an idle server, a server to be allocated is selected (Step 1309) and the load allocating apparatus d100 to d300 are instructed to change the contents of the server address correspondence tables T30 to T32. After it is confirmed that the contents of all the load allocating apparatus are changed and are coincident, the charge calculation equation is changed (step 1310).

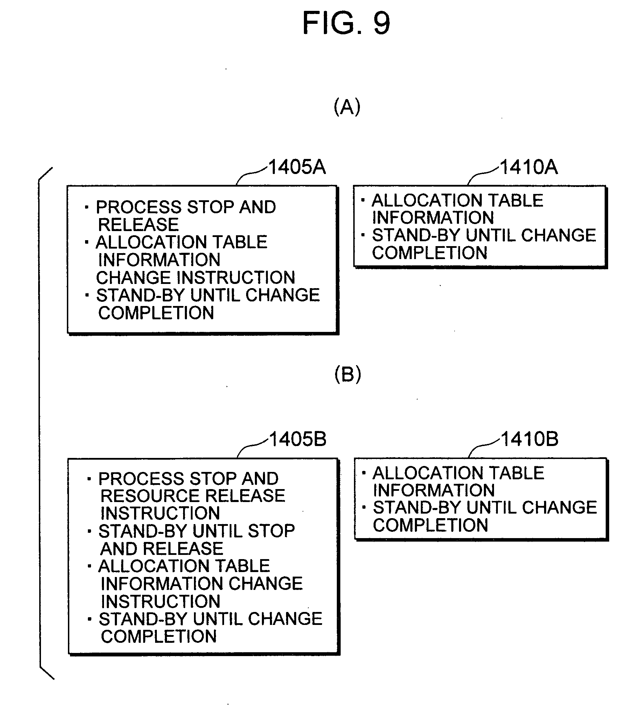

An example of the procedure by the control program P20 of the management server C0 has been described above. It is apparent that the whole of the procedure is not necessarily required to be executed by the control program P20. For example, monitoring and collecting the operation information may not be performed by the control program P20 but the operation information may be received from another program. The contents of the processes at Step 1305 and Step 1310 which the control program P20 executes essentially may be replaced by Step 1405A(B) and Step 1410A(B) shown in Figs. 9(A) and 9(B) in order not to change the charge information. Further, if each server has a function of not receiving a new user request after the process stop instruction, as shown in Fig. 9(A) Step 1305 and Step 1310 may be replaced by Step 1405A and Step 1410A in order to instruct to change the server address correspondence tables T30 to T32 without waiting for completion of the process stop.

In the above description, the volume access privilege table T33 of the storage resources is not changed. Even if the server allocation is changed, it is possible to prevent the volume without an access privilege from being accessed, because each program accesses the storage by adding the user ID.

Next, a second embodiment of the invention will be described in which the data center is configured by using highly multiplexed SMP servers with a virtual computer function PRMF.

The connection diagram for the data center and users is the same as that shown in Fig. 1.

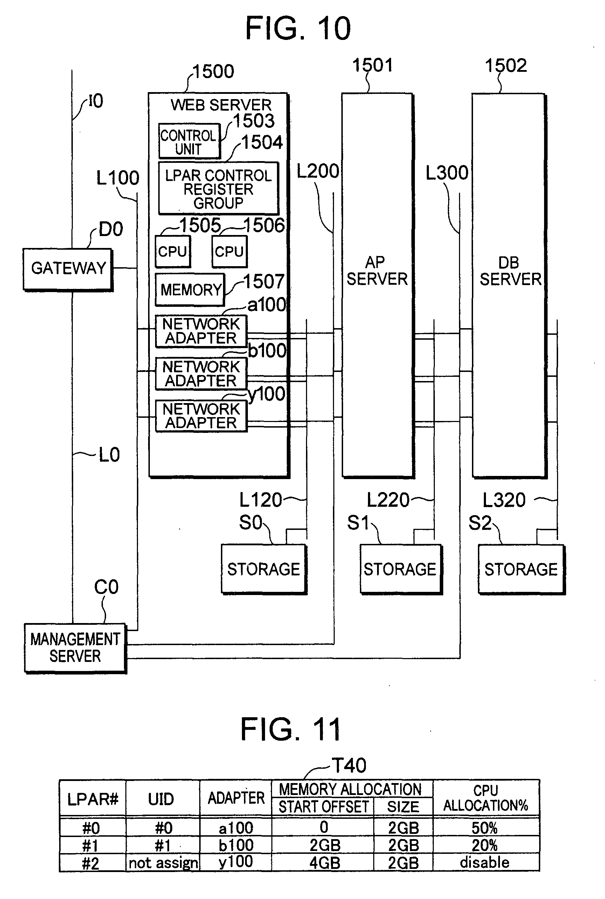

The data center shown in Fig. 10 has one Web server, one AP server and one DB server each having a virtual computer function PRMF. The internal structures of the AP server 1501 and DB server 1502 are the same as that of the Web server 1500, and so the description thereof is omitted.

The user condition input dialog of the second embodiment is the same as that shown in Fig. 22.
Namely, in this contract, only a user request packet having the source IP address of A0 or A1 is considered as the packet of the user company A. The IP addresses used by the user company A is a100 for the Web server, a200 for the AP server, and a300 for the DB server.

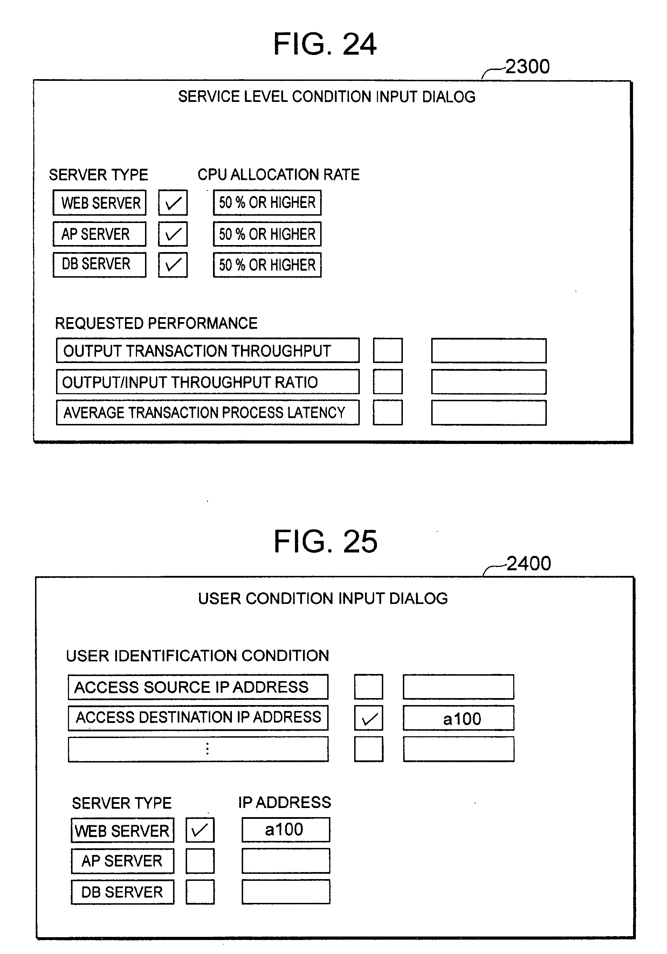

Fig. 24 is an example of a service level contract condition input dialog. In this example, the contract with the A company indicates that the CPU allocation rate by the PRMF function of each of the Web server, AP server and DB server is controlled to be 50 % or higher.

Reverting to Fig 10, the Web server 1500 is constituted of a control unit 1503, an LPAR control register group 1504, CPU's 1505 and 1506, a memory 1507 and network adapters a100, b100 and y100. LPAR is the abbreviation of Logical PARtition (logical resource partition). The LPAR control register group 1504 stores information on a method of allocating resources to each OS.

Fig. 11 shows an example of information stored in the LPAR control register group 1504. A conventional technology PRMF has information other than the user identifier UID field. LPAR# is an identifier uniquely assigned to each resource to be allocated to each OS. The network adapter is provided for each LPAR. A network adapter address is set to be identical to the IP address assigned to each user contracted by using the user condition input dialog. Therefore, a user request packet entering a network adapter is passed to a program running on OS of the corresponding LPAR. A memory allocation field stores information on which area of the memory 1507 is used by each LPAR. A CPU allocation % field stores information on at what ratio an OS belonging to each LPAR and a program on OS are operated on CPU's. The control unit 1503 refers to this information to control the operation ratio of LPAR's.

In this embodiment, the user identifier UID field is added which is made in one-to-one correspondence with LPAR. Under the PRMF control, different LPAR's cannot share resources so that securities between users can be guaranteed.

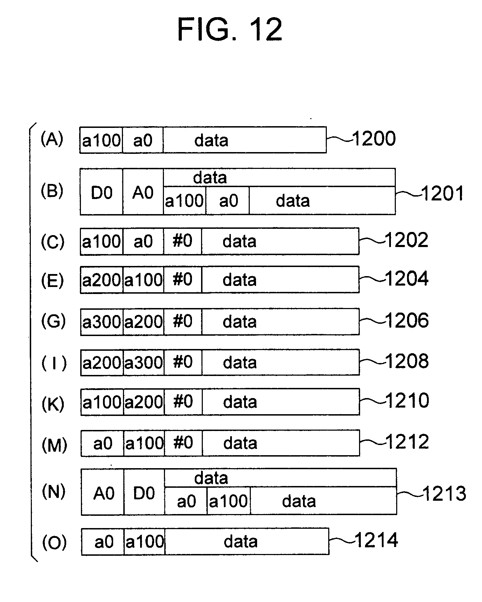

Similar to the first embodiment, consider now that a user request is passed from the client a0, to the Web server a100, AP server a200, DB server a300, AP server a200, Web server a100, and back to client a0. The client a0 generates a packet 1200 shown in Fig. 12(A). The gateway A0 generates a packet 1201 (Fig. 12(B)), and the gateway D0 generates a packet 1202 (Fig. 12(C)), similar to the first embodiment.

The packet 1202 is passed via the signal line L0 to the network adapter a100 having the address a100 and to the application program on LPAR#0, i.e., an application program of the user A. This program generates a packet 1204 (Fig. 12(E)) having a destination address a200. Thereafter, in a similar manner, the packet is passed to an application program of the A company on the AP server 1501 and to the application program of the A company on the DB server 1502. (Although not shown, the AP server 1501 has network adapters a200, b200 and y 200 corresponding to LPAR#0, #1 and #2. The LPAR#0 and #1 correspond to the user identifiers #0 and #1. This is also applied to the DB server 1502.) Similarly, the response from the DB server 1502 to the AP server 1501, Web server 1500 and to client a0 is performed by application programs on LPAR's assigned to the A company. Although the detailed description is not given, the above operations sequentially generate packets 1206 (Fig. 12(G)) to 1214 (Fig. 12(0)).

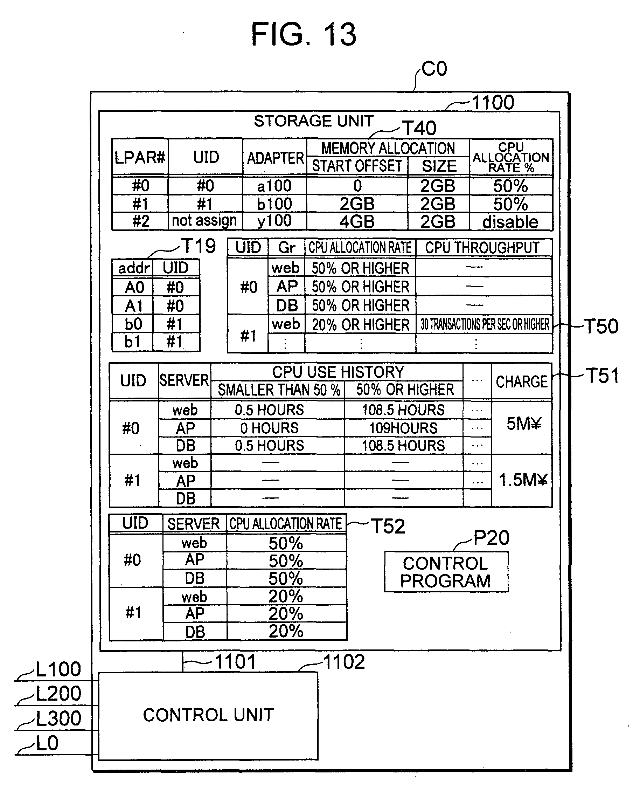

Fig. 13 is a diagram showing the structure of the management server C0. T40 represents a LPAR allocation management table, and T19 represents a user ID table. T50 represents a service level contract content table for each user. In this contract, a CPU allocation rate of 50 % or higher is assigned to each LPAR of all of the Web server, AP server and DB server of the user having the user identifier #0. A CPU allocation rate of 20 % at a minimum is assigned for the user having the user identifier #1, an access response throughput from the data center is maintained 30 transactions per second, and if there is a possibility that this throughput is not satisfied, the CPU allocation rate is increased. The control program P20 refers to the monitoring results and service level contract content table T50 acquired from the signal lines L100, L200, L300 and L0 to check whether the current resource allocation satisfies the service level contract, and stores the check results in the service history storage table T51. For example, the actual CPU use rate history of LPAR of the user identifier #0 is recorded. If the access response throughput of the user identifier #1 is lower than 30 transactions per second, the set CPU allocation rate is increased. To this end, the management server C0 stores a CPU allocation management table T52 which stores information on what CPU allocation rate is set to which user. This table 52 stores the same contents as those in the CPU allocation rate field of the LPAR control register group of each of the Web server, AP server and DB server. The management of the charge information field of the service history storage table T51 is performed in the manner similar to the first embodiment.

The procedure of the control program P20 to initially allocate resources in order to execute the above-described control will be described with reference to Fig. 21.

The management server C0 first acquires the information entered in the user condition input dialog shown in Fig. 22 to generate the user ID table T19 (Step 2001). Next, this information is set to the gateway D0 via the signal line L0 (Step 2002).

The management server C0 acquires the information entered in the service level condition input dialog shown in Fig. 24 to generate the service level contract content table T50 and the network adapter field in the LPAR allocation management table T40 (Step 2003).

Next, the service level contract content table T50 is referred to to confirm that a CPU allocation rate of 50 % at a minimum is assigned to the user identifier #0 and that a CPU allocation rate of 20 % is assigned to the user identifier #1.
Thereafter, the CPU allocation fields of the CPU allocation management table T52 and LPAR allocation management table T40 are generated (Step 2004). The contents of the LPAR allocation management table T4 are set to the LPAR control register group of the servers 1500, 1501 and 1502 via the signal lines L100, L200 and L300 (Step 2005). The service history storage table T21 is then generated in accordance with the service level contract content table T23 (Step 2006).

With the above operations, the management server C0 prepares information necessary for the resource allocation control and sets the information to the gateway D0 and the servers 1500, 1501 and 1502, so that the system can start its operation under the conditions of proper resource allocation.

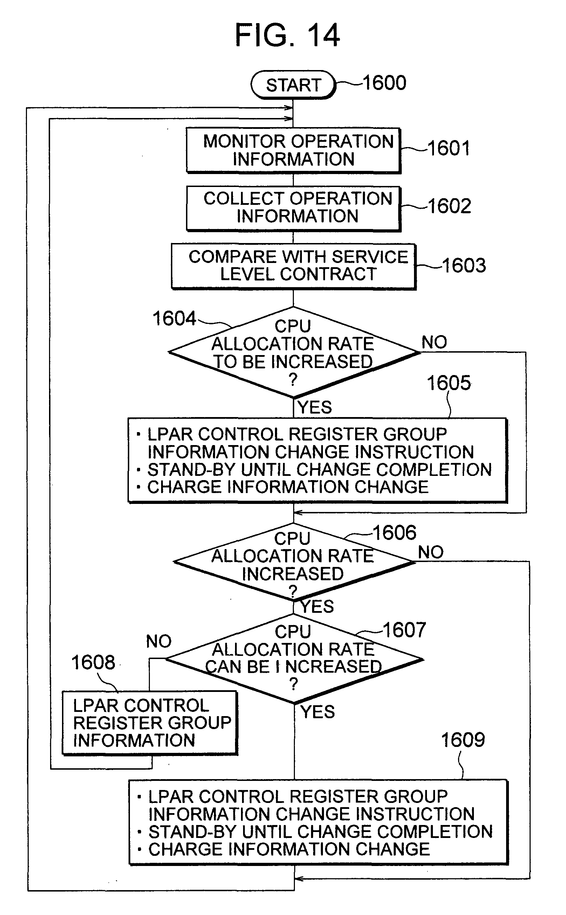

Next, the procedure of the control program P20 to change a resource allocation when the load increases will be described with reference to Fig. 14.

Operation information monitoring (Step 1601), operation information collection (Step 1602) and comparison with a service level contract (Step 1603) are similar to respective Steps 1301, 1302 and 1303 of the first embodiment shown in Fig. 8. It is thereafter checked whether the CPU allocation rate can be reduced (Step 1604). If possible, the management server instructs to change the contents of the LPAR control resister group of the corresponding server. A method of checking whether the CPU allocation rate can be reduced is similar to the first embodiment. After the contents are changed, a charge calculation equation is changed (Step 1605). In this example, histories of the CPU use rate and allocated time are recorded. A unit charge per unit time is predetermined for each of the Web server, AP server and DB server to charge a total of unit charges multiplied by CPU use rates.
Obviously, the unit charge may be set differently to each of the Web server, AP server and DB server, or the unit charge may be set based upon an effective performance of each server.

Next, it is checked whether it is necessary to increase the CPU allocation rate (Step 1606). If it is necessary, it is checked whether the total of the CPU allocation rates set to the corresponding serve exceeds 100 % (Step 1607). If exceeds, this effect is notified to the system administrator (Step 1608). If not exceed, the management server instructs to change the contents of the LPAR control register group of the corresponding server, and after this change, the charge information is changed (Step 1609).

Lastly, a third embodiment will be described in which many and unidentified general consumers access home pages provided by A and B companies.

A connection diagram between a data center and users is the same as that shown in Fig. 1. General users are clients c0 and c1.

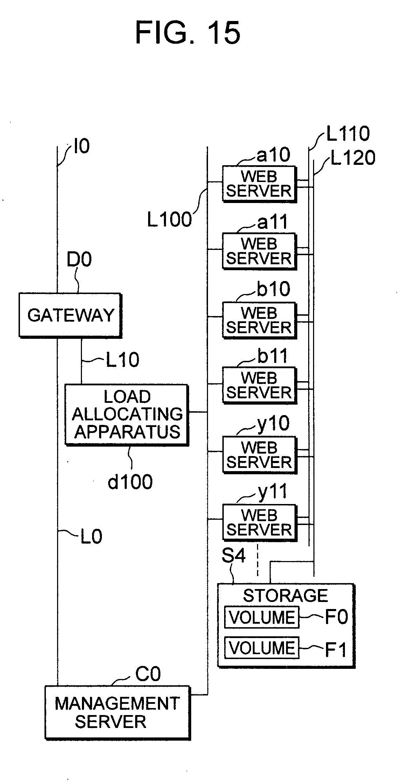

Fig. 15 shows the structure of a data center. Similar to the first embodiment, a load allocating apparatus d100 can distribute loads to a plurality of servers. For the purposes of description simplicity, only Web servers are used. All the Web servers share a storage S4 via a signal line L120. The storage S4 stores files F0 and F1, the file F0 storing information including home page information of the A company and the file F1 storing information including home page information of the B company. The home page information has a tree structure so that each information can be sequentially accessed from a root page. It is assumed that the address for accessing the home page of the A company is a100 and that for the B company is b100.

Fig. 25 shows an example of an input dialog to be used for a contract between the A company and the data center to determine the condition of general users accessing the home page. In this example, the contents of this contract are as follows. As the access destination IP address of an access request packet input to the gateway D0, a100 is used in order to identify that the access to the home page of the A company is an access request from a user group belonging to the A company. In addition, the A company uses a100 as the IP address for creating a home page.

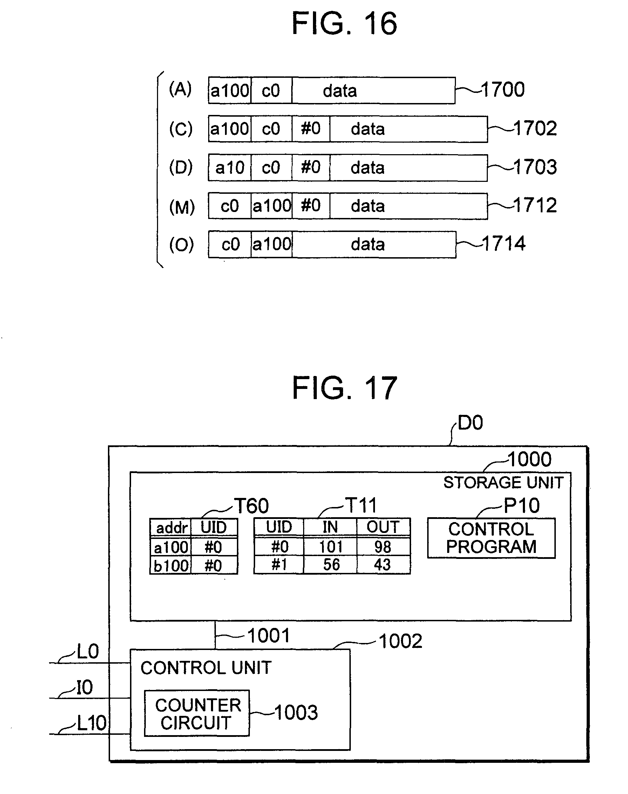

The client c0 generates a packet 1700 shown in Fig. 16(A) in order to access the home page of the A company. The gateway 1700 has a user ID table T60 shown in Fig. 17. Since the destination address of the packet 1700 is a100, the gateway can know that the packet is to be accessed to the home page of the user identifier #0, and generates a packet 1702 shown in Fig. 16(C). Thereafter, the load allocating apparatus d100 sends this access request to either a Web server a10 or a11. In this example, the server a10 is selected. A packet 1703 is therefore generated (Fig. 16(D). Similarly, the load allocating apparatus d100 changes the packet to a packet 1712 (Fig. 16(M)) as a response packet which is changed to a packet 1714 (Fig. 16(0)) by the gateway D0 and returned to the client c0.

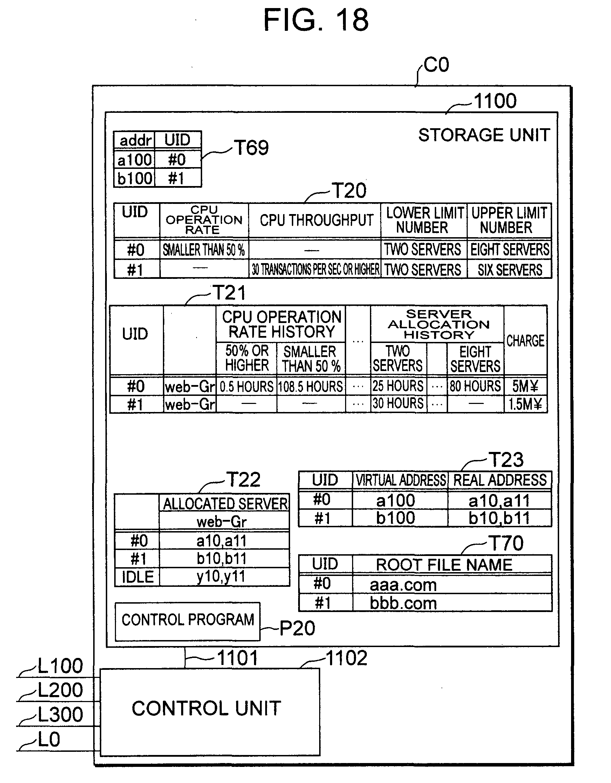

The internal structure of the management server C0 is shown in Fig. 18. The structure is the same as that shown in Fig. 4, excepting that a root file management table T70 is added. This table T70 stores the file name of a root page of the home page for each user identifier.

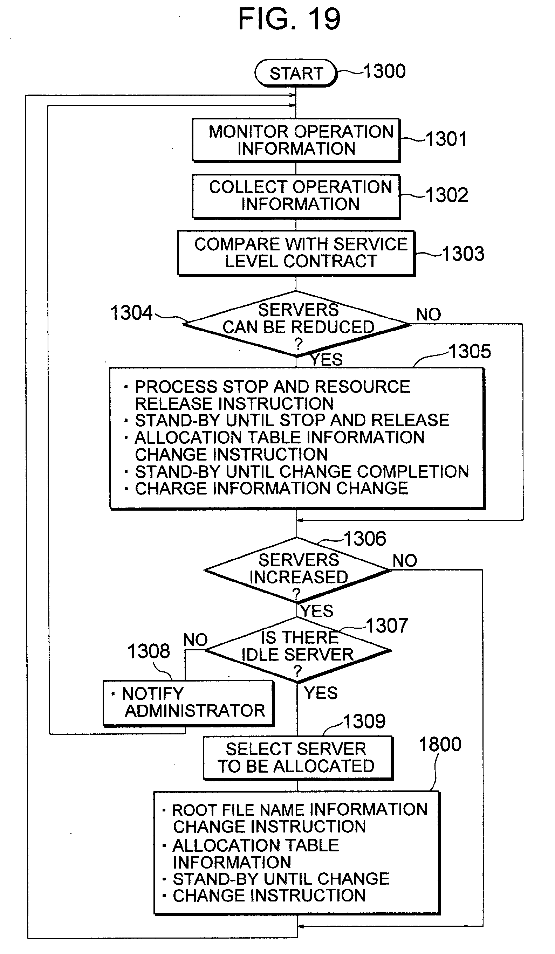

The procedure of the control program P20 to be executed when the load increases is illustrated in Fig. 19. This procedure is the same as that shown in Fig. 8, excepting that Step 1310 shown in Fig. 8 is replaced by Step 1800. Only Step 1800 different from that shown in Fig. 8 will be described. After a server is selected at Step 1309, the root file management table T70 is referred to at Step 1800 to instruct the selected server to register the root file name corresponding to the user identifier. Thereafter, similar to Step 1310 shown in Fig. 8, the load allocating apparatus d100 is instructed to change the server address correspondence table T30. After the completion of this change, the charge information is changed. A newly selected server has initially a standard root file name and changes (registers) the root file name to thereby enable to access the correct home page.

## Claims

1. A computer resource allocating method for allocating a different computer to each of a plurality of users connected to a computer system via a network, the computer system including a plurality of interconnected computers for processing an input packet from each user, and the method comprising the steps of:
inputting from each user a service level condition contracted with the computer system (DD0);
assigning each service level condition with an identifier (#0, #1) for identifying the service level condition;
classifying the plurality of computers into groups each corresponding to each identifier in accordance with the service level condition, and forming an allocation definition table (T30, T31, T32) storing information on a correspondence between each identifier and at least one computer assigned to the identifier;
inputting (Fig. 22) information (addr) necessary for identifying a user related to each input packet (1200, 1700) from the input packet;
forming a user identification table (T19, T69) storing information on a correspondence between each identifier (#0, #1) and each information (addr); and
by referring to the user identification table, acquiring the identifier from a received input packet, and by referring to the allocation definition table, transferring the received input packet to the computer allocated to the acquired identifier.

2. A computer resource allocating method according to claim 1, wherein the computer system (DD0) further comprises a load allocating apparatus (d100, d200, d300) for distributing loads of the plurality of computers, and the allocation definition table is set to the load allocating apparatus.

3. A load distributing apparatus (d100, d200, d300) for distributing loads of a plurality of interconnected computers of a computer system connected to a plurality of users via a network, the computer system processing an input packet from each user, and the apparatus comprising:
an allocation definition table (T22) storing information on a correspondence between an identifier (#0, #1) and at least one computer, the identifier being assigned to each service level condition (Fig. 23) contracted between the computer system (DD0) and each user, and identifying each service level condition, at least one computer being assigned to each identifier and the plurality of computers being classified into groups each corresponding to each identifier in accordance with the service level condition; and
means for receiving an input packet (1202, 1702) added with the identifier, deriving the identifier (#0) from the received input packet, and by referring to said allocation definition table, transferring the received input packet to the computer (a10, a11) assigned to the derived identifier.

4. A computer resource allocating method according to claim 1, wherein the input packet is a request packet from a user, and the information (addr) in the user identification table necessary for identifying the user related to the request packet is a transmission source IP address (A1, A1; b0, b1) of the request packet.

5. A computer resource allocating method according to claim 1, wherein the input packet is a request packet from a user, and the information (addr) in the user identification table necessary for identifying the user related to the request packet is a transmission source IP address (a100) of the request packet.

6. A method of allocating computer resources to each of a plurality of users connected to a computer system via an external network, the computer system including a plurality of computers interconnected via an internal network for processing an input packet from each user, and the method comprising the steps of:
for a use contract between each user and the computer system, setting from each user a virtual IP address (a100, b100) to be used as an access destination address of a process request packet (1200; 1700), as an address to be used for accessing the user system in the computer system, determining from the process request packet which of an access source IP address and an access destination IP address in the process request packet is used as information (addr) necessary for identifying a user related to the process request packet, and urging each user to input the virtual address;
urging each user to input a service level condition (Fig. 23) as a portion of the use contract, the service level condition including at least upper and lower limits of the number of computers allocated to process the process request packet supplied from each user; and
allocating a computer (a10, a11) for processing the process request packet supplied from each user in accordance with the input service level condition, and recording a history of the number of allocated computers.

7. A method of allocating computer resources to each of a plurality of users connected to a computer system via an external network, the computer system including a plurality of computers interconnected via an internal network for processing an input packet from each user, and the method comprising the steps of:
for a use contract between each user and the computer system, setting from each user a virtual IP address (a100, b100) to be used as an access destination address of a process request packet (1200; 1700), as an address to be used for accessing the user system in the computer system, determining from the process request packet which of an access source IP address and an access destination IP address in the process request packet is used as information (addr) necessary for identifying a user related to the process request packet, and urging each user to input the virtual address;
urging each user to input a service level condition (Fig. 23) as a portion of the use contract, the service level condition including at least a use rate of computers allocated to process the process request packet supplied from each user; and
allocating a computer (a10, a11) for processing the process request packet supplied from each user in accordance with the input service level condition, and recording a history of the use rate of allocated computers.

8. A computer system for processing an input packet from each of a plurality of users, comprising:
a plurality of computers (a10 - y11, a20-y21, a30 - y30) interconnected via a network, each computer being assigned a process;
managing means (C0) for receiving, from each of the plurality of users, a condition of deriving information (addr) necessary for identifying a user related to a packet, from the packet, and a service level condition related to processing the packet, forming a user identification table (T19; T69) storing information on a correspondence between an identifier (#0, #1) for identifying the service level condition and each information (addr), determining a computer group assigned to each user in accordance with the service level condition, and forming an allocation definition table (T22, T52, T23) storing information on a correspondence between each information (addr) and each computer group;
means (D0) for adding the identifier to an input packet by referring to the user identification table; and
a load allocating apparatus (d100, d200, d300) for deriving the identifier from the input packet added with the identifier, identifying a computer group for processing the input packet in accordance with the derived identifier and with reference to the allocation definition table, and transferring the input packet to the identified computer group.

9. A computer resource allocating method for allocating a different computer group to each of a plurality of users connected to a computer system (Fig. 10) via a network, the computer system including one or more computers (1500, 1501, 1502) for processing an input packet from each of the plurality of users, the computer (1500) performing a time divisional operation of a plurality of operating systems (OSes) each utilizing a dedicated resource (V0, V1), the computer system being capable of defining an execution rate of the time divisional operation, and the method comprising the steps of:
inputting (Fig. 23) from each user a service level condition contracted with the computer system (DD0);
assigning each service level condition with an identifier (#0, #1) for identifying the service level condition;
classifying a plurality of OSes of the computer into groups each corresponding to the identifier, in accordance with the service level condition, and forming a time divisional execution rate table (T40) storing information on a correspondence between the identifier and a time divisional execution rate of at least one computer corresponding the OS assigned to the identifier;
inputting information (addr) necessary for identifying a user related to each input packet (1200; 1700) from the input packet;
forming a user identification table (T19) storing information on a correspondence between each identifier (#0, #1) and each information (addr); and
by referring to the user identification table, acquiring the identifier from a received input packet, and by referring to the time divisional execution rate table, transferring the received input packet to the OS assigned to the acquired identifier.

10. A computer system (Fig. 10) having a plurality of users connected via a network and having one or more computers (1500, 1501, 1502) for processing an input packet from each of the plurality of users, wherein:
the computer (1500) performs a time divisional operation of a plurality of operating systems (OSes) each utilizing a dedicated resource (V0, V1), and the computer system is capable of defining an execution rate of the time divisional operation;
a service level condition contracted with the computer system (DD0) is input from each user (Fig. 23);
an identifier (#0, #1) for identifying the service level condition is assigned to each service level condition;
a plurality of OSes of the computer are classified into groups each corresponding to the identifier, in accordance with the service level condition, and a time divisional execution rate table (T40) is formed which stores information on a correspondence between the identifier and a time divisional execution rate of at least one computer corresponding the OS assigned to the identifier;
information (addr) necessary for identifying a user related to each input packet (1200; 1700) from the input packet is input;
a user identification table (T19) is formed which stores information on a correspondence between each identifier (#0, #1) and each information (addr); and
by referring to the user identification table, the identifier is acquired from a received input packet, and by referring to the time divisional execution rate table, the received input packet is transferred to the OS assigned to the acquired identifier.

11. A computer resource allocating method for a computer system (DD0) having a plurality of computers interconnected via a network and processing a request from each of a plurality of users, the method automatically changing a computer allocation to each user, and the method comprising the steps of:
monitoring an operation state of the computer resources;
comparing the operation state with a service level of each user;
judging from the comparison whether a computer allocation to each user is to be changed;
changing a computer allocation table (T31 ∼ T33) of each user; and
changing charge information in accordance with a change in the computer allocation.

12. A computer resource allocating method for a computer system (DD0) having a plurality of computers interconnected via a network and processing a request from each of a plurality of users, the method automatically changing a computer allocation to each user, and the method comprising the steps of:
receiving an operation state of the computer resources;
comparing the operation state with a service level of each user;
judging from the comparison whether a computer allocation to each user is to be changed; and
if it is judged that a change in the computer allocation is necessary, changing a computer allocation table (T31 ∼ T33) of each user.

13. A computer resource allocating method according to claim 12, wherein the computer system further comprises a plurality of load allocating means, and the method further comprises the steps of setting the changed computer allocation table of each user to the load allocating means, and of standing by until the setting at all of the plurality of load allocating means is completed.

14. A computer resource allocating method according to claim 12, wherein the plurality of computers include a plurality of computer groups having different functions, the computer allocation allocates computers belonging to the same computer group, and when the computer resources of some computer group are to be increased, computers are selected from the same computer group.

15. A computer resource allocating method for a computer system (DD0) having a plurality of computers interconnected via a network each being set with a standard access root file, the computer system processing a request from each of a plurality of users, the method automatically changing a computer allocation to each user, and the method comprising the steps of:
receiving an operation state of the computer resources;
comparing the operation state with a service level of each user;
judging from the comparison whether a computer allocation to each user is changed;
changing a computer allocation table (T31 ∼ T33) of each user; and
instructing to change the root file name of each computer.

16. A computer system having a plurality of computers and computer resource allocating means (d100 ∼ d300) interconnected via a network and processing a request packet from each of a plurality of users, said computer resource allocating means comprising:
means for receiving an operation state of the computer resources;
means for comparing the operation state with a service level of each user and judging from the comparison whether a computer allocation to each user is changed; and
means for changing a computer allocation table (T31 ∼ T33) of each user if the computer allocation table is to be changed.

17. A computer system according to claim 16, wherein said computer resource allocating means further comprises:
means for monitoring the operation state of the computer resources; and
means for changing charge information in accordance with a change in the computer allocation.

18. A computer resource allocating method for a computer system (DD0) having one or more computers interconnected via a network and processing a request packet from each of a plurality of users, each computer performing a time divisional operation of a plurality of operating systems each utilizing a dedicated resource, the computer system being capable of defining an execution rate of the time divisional operation, and the method for automatically changing a computer allocation to each user, comprising the steps of:
monitoring an operation state of the computer resources;
comparing the operation state with a service level of each user;
judging from the comparison whether a rate of the time divisional operation for each user is changed;
changing a time divisional operation rate table (T51) of each user; and
changing charge information in accordance with a change in the time divisional operation rate.

19. A computer resource allocating method for a computer system (DD0) having one or more computers interconnected via a network and processing a request packet from each of a plurality of users, each computer performing a time divisional operation of a plurality of operating systems each utilizing a dedicated resource, the computer system being capable of defining an execution rate of the time divisional operation, and the method for automatically changing a computer allocation to each user, comprising the steps of:
receiving an operation state of the computer resources;
comparing the operation state with a service level of each user;
judging from the comparison whether a rate of the time divisional operation for each user is changed; and
changing a time divisional operation rate table (T51) of each user.

20. A computer system having one or more computers and computer resource allocating means interconnected via a network and processing a request packet from each of a plurality of users, each computer performing a time divisional operation of a plurality of operating systems each utilizing a dedicated resource, the computer system being capable of defining an execution rate of the time divisional operation, and said computer resource allocating means comprising:
means for receiving an operation state of the computer resources;
means for comparing the operation state with a service level of each user and judging from the comparison whether a computer allocation to each user is changed; and
means for changing a computer allocation table (T51) of each user if the computer allocation table is to be changed.

21. A computer system according to claim 20,
wherein said computer resource allocating means further comprises:
means for monitoring the operation state of the computer resources; and
means for changing charge information in accordance with a change in the computer allocation.

22. A charging method for a computer system having a plurality of computers and computer resources allocating means (d100 ∼ d300) interconnected by a network, the computer system processing a request packet from each of a plurality of users, and the method for charging each user, comprising the steps of:
comparing a service level preset to each user with an operation state of computer resources;
recording the numbers of allocated computers and allocated times for each user identifier; and
calculating a charge in accordance with products of the numbers of allocated computers and allocated times.

23. A charging method for a computer system (DD0) having a plurality of computers classified into computer groups each having a different function and a plurality of computer resources allocating means (d100 ∼ d300), respectively interconnected by a network, the computer system processing a request packet from each of a plurality of users, and the method for charging each user, comprising the steps of:
comparing a service level preset to each user with an operation state of computer resources and changing if necessary a computer allocation to each user in accordance with the comparison;
recording the numbers of allocated computers and allocated times for each computer group and for each user identifier; and
calculating a charge in accordance with products of the numbers of allocated computers and allocated times for each computer group.

24. A charging method for a computer system (DD0) having a plurality of computers classified into computer groups each having a different performance and a plurality of computer resources allocating means (d100 ∼ d300), respectively interconnected by a network, the computer system processing a request packet from each of a plurality of users, and the method for charging each user, comprising the steps of:
comparing a service level preset to each user with an operation state of computer resources and changing if necessary a computer allocation to each user in accordance with the comparison;
recording the numbers of allocated computers and allocated times for each computer group and for each user identifier; and
calculating a charge in accordance with products of the numbers of allocated computers and allocated times for each computer group.

25. A charging method for a computer system (DD0) having a plurality of computers and computer resources allocating means (d100 ∼ d300) interconnected by a network, the computer system processing a request packet from each of a plurality of users, and the method for charging each user, comprising the steps of:
comparing a service level preset to each user with an operation state of computer resources and changing if necessary a computer allocation to each user in accordance with the comparison;
measuring the number of request packets per unit time input to the computer system from each user and the number of response packets per unit time sent from the computer system to each user; and
calculating a charge from a measurement result.

26. A charging method for a computer system (DD0) having one or more computers and computer resource allocating means (d100 ∼ d300) interconnected via a network and processing a request packet from each of a plurality of users, each computer performing a time divisional operation of a plurality of operating systems each utilizing a dedicated resource, the computer system being capable of defining an execution rate of the time divisional operation, and the method for charging each user, comprising the steps of:
automatically changing a computer allocation to each user;
comparing a service level preset to each user with an operation state of computer resources and changing if necessary a time division allocation rate of a computer time division operation of each user;
recording the time division allocation rate and allocated time at each user identifier; and
calculating a charge from a product of the allocation time rate and allocated time.

27. A charging method for a computer system (DD0) having a plurality of computers classified into computer groups each having a different function and a plurality of computer resources allocating means (d100 ∼ d300), respectively interconnected by a network, the computer system processing a request packet from each of a plurality of users, each computer performing a time divisional operation of a plurality of operating systems each utilizing a dedicated resource, the computer system being capable of defining an execution rate of the time divisional operation, and the method for charging each user comprising the steps of:
comparing a service level preset to each user with an operation state of computer resources and changing if necessary a computer allocation and a time division allocation rate of the time division operation of each user in accordance with the comparison;
recording the numbers of allocated computers and allocated times, time division allocation rates and allocated times for each computer group and for each user identifier; and
calculating a charge in accordance with products of the numbers of allocated computers, allocation rates and allocated times for each computer group.

28. A charging method for a computer system (DD0) having a plurality of computers classified into computer groups each having a different performance and a plurality of computer resources allocating means (d100 ∼ d300), respectively interconnected by a network, the computer system processing a request packet from each of a plurality of users, and the method for charging each user, comprising the steps of:
comparing a service level preset to each user with an operation state of computer resources and changing if necessary a computer allocation and a time division allocation rate of the time division operation to each user in accordance with the comparison;
recording the numbers of allocated computers and allocated times, time division allocation rates and allocated times for each computer group and for each user identifier; and
calculating a charge in accordance with products of the numbers of allocated computers, allocation rates and allocated times for each computer group.
